**Europäisches Patentamt**

**European Patent Office**

**Office européen des brevets**

(19)

(11) Numéro de publication : **0 503 992 A1**

## (12) DEMANDE DE BREVET EUROPEEN

(21) Numéro de dépôt : **92400507.7**

(22) Date de dépôt : **27.02.92**

(51) Int. Cl.⁵ : **B23P 19/04**

(30) Priorité : **08.03.91 FR 9102803**

(43) Date de publication de la demande :
**16.09.92 Bulletin 92/38**

(84) Etats contractants désignés :
**AT BE CH DE DK ES GB IT LI NL SE**

(71) Demandeur : **FERCO INTERNATIONAL Usine
de Ferrures de Bâtiment Société à
responsabilité limitée
2, rue du Vieux-Moulin Reding
F-57400 Sarrebourg (FR)**

(72) Inventeur : **Kautt, Jean-Jacques
24, rue Pertois
F-67000 Strasbourg (FR)**

(74) Mandataire : **Rodhain, Claude et al
Cabinet Claude Rodhain 30, rue la Boétie
F-75008 Paris (FR)**

(54) **Dispositif automatique de pose d'un joint souple, en particulier d'un joint extérieur dans une rainure de vantail.**

(57) Un dispositif automatique de pose d'un joint souple (2) est monté sur un ensemble chariot-portique à mouvements croisés, avec possibilité de rotation commandée autour d'un axe vertical et comporte :

un ensemble support (100) solidaire en rotation d'un fût,

une potence (200), mobile en basculement autour d'un axe horizontal (130) parallèle à la direction générale de progression du dispositif (B),

un équipage (300), mobile en translation verticle (D), comportant des moyens de débit et d'advance du joint, de découpe du joint, de pose du joint et de guidage (360) par rapport au vantail (1),

des moyens (240,250) pour faire pivoter la potence et des moyens (260,270) pour relever l'équipage, de manière à éloigner du vantail, en directions horizontale et verticale, les moyens de pose du joint.

Selon la demande, le joint souple (2) étant un joint extensible tel qu'un joint extérieur à poser dans une rainure du vantail, notamment un joint souple d'étanchéité à poser sur la face interne d'une aile de recouvrement de ce vantail, les moyens de débit et d'avance en continu du joint amènent le joint jusqu'aux moyens de pose en suivant un trajet essentiellement rectiligne entre une pluralité de paires de galets en vis-à-vis (331-336,351,352), l'un au moins de ces galets (331,333) étant moteur et synchronisé sur l'avance de la tête, et au moins un autre de ces galets, non moteur, coopérant avec des moyens (376) pour contrôler l'entraînement du joint, afin de compenser le glissement du à l'allongement.

FIG_1

EP 0 503 992 A1

La présente invention concerne un dispositif automatique de pose d'un joint souple, en particulier d'un joint extérieur dans une rainure de vantail de fenêtre, notamment pour la pose d'un joint souple d'étanchéité et notamment sur la face interne de l'aile de recouvrement, perpendiculaire au chant externe, de l'ouvrant.

On a déjà décrit, en particulier dans le EP-A-0 387 124 au nom de la Demanderesse, une machine réalisant une telle opération de pose de joint, notamment pour la pose du joint situé sur le chant extérieur du vantail.

La machine décrite dans ce document peut être adaptée à d'autres opérations, mais une difficulté se présente lorsqu'il s'agit de poser le joint sur la face interne de l'aile de recouvrement du vantail — comme cela est typiquement le cas des profils en PVC (poly(chlorure de vinyle)), à la différence des profils en bois.

Dans l'état antérieur de la technique (typiquement pour les profils en bois), la pose du joint est en effet effectuée sur le chant du vantail. Ce chant périphérique est perpendiculaire au plan horizontal du vantail — le plan étant horizontal pour un vantail couché sur un plan de travail.

Au contraire, l'aile de recouvrement solidaire de la face extérieure du vantail présente deux faces qui sont parallèles au plan horizontal du vantail, et ces ailes de recouvrement constituent le périmètre externe du vantail ; en effet, l'aile de recouvrement déborde le périmètre constitué par le chant externe. C'est sur la face interne de cette aile que le présent dispositif doit déposer automatiquement le joint souple d'étanchéité.

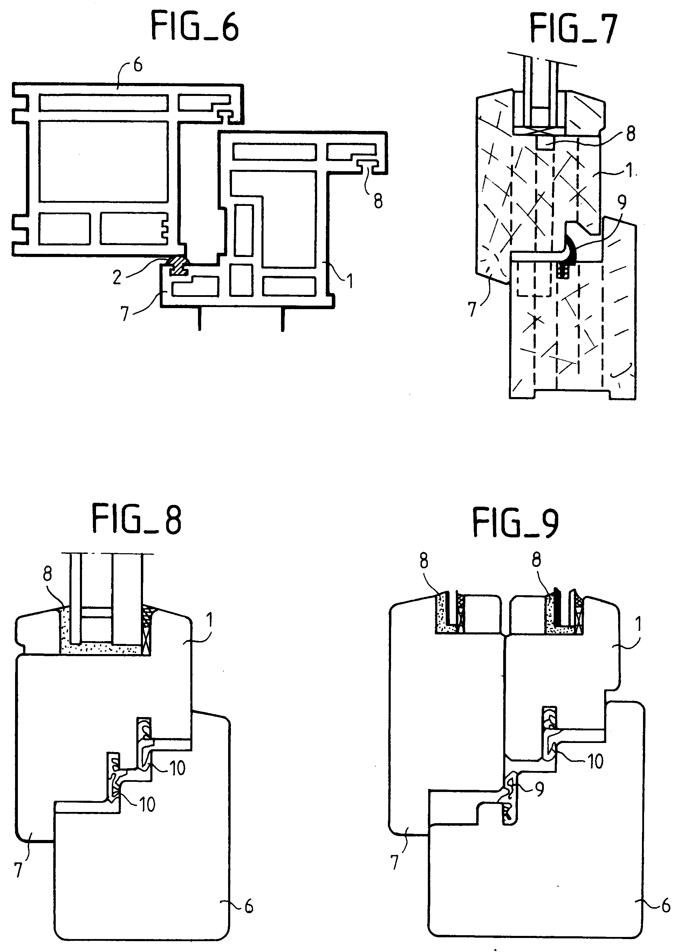

Les figures 6 à 9 illustrent plus précisément ces différences de structure : la figure 6 illustre une section d'un ensemble dormant-ouvrant en PVC, pourvu de son joint spécifique (susceptible d'être posé automatiquement, comme on le verra, par le dispositif de l'invention), tandis que les figures 7 à 9 illustrent, également en section, diverses formes d'ensembles dormant-ouvrant en bois, pourvus de joints susceptibles d'être posés par les dispositifs de l'art antérieur, par exemple par la machine du EP-A-0 387 124 précité.

Sur ces différentes figures, la référence 1 désigne l'ouvrant et la référence 6, le dormant ; l'aile de recouvrement est référencée 7 et le joint de vitrage 8. Comme on peut le voir, dans le cas de la figure 6 (cas traité par l'invention) le joint 2 occupe une position et une orientation différentes de celles des autres cas (figures 7 à 9) : le joint d'étanchéité est en effet, dans ces derniers cas, habituellement un joint externe sur dormant (référencé 9) ou un joint externe sur ouvrant (référencé 10). On voit ainsi que, dans aucun des cas de figure traités par les machines de l'art antérieur, le joint ne se trouvait sur l'aile de recouvrement 7.

Par ailleurs, la nature des matériaux constituant les éléments du vantail sont variés. Il se présente de ce fait une difficulté de positionnement du joint au début des opérations de pose ; en effet, selon la nature des matériaux du joint et du vantail, et du fait de la traction exercée sur le joint, ce dernier peut glisser de sa position initiale de pose, pouvant laisser ainsi un espace non équipé de joint souple.

En effet, dans ces deux cas, l'encombrement de la tête, inhérent à sa structure, ainsi que celui du dispositif spécifique de pose du joint, ne permet pas de résoudre le problème de la pose du joint sur la face interne de l'aile de recouvrement et de garantir le maintien initial de la position du joint au début de la pose automatique.

Ceci concerne plus particulièrement, dans la structure d'ensemble, les éléments mêmes du dispositif de pose qui nécessitent un encombrement supérieur à celui autorisé par la pièce d'oeuvre (le vantail), à savoir la largeur de l'aile de recouvrement qui s'étend du chant vertical du vantail à l'extrémité de l'aile de recouvrement ; plus précisément, les éléments du dispositif de pose ne se présenteraient pas sur le dessus de la rainure de la face interne de l'aile de recouvrement.

Un autre aspect concerné est celui de la pose du joint souple dans l'angle de la rainure de la face interne de l'aile de recouvrement.

Les éléments du dispositif de pose ont en effet à effectuer une rotation selon un axe vertical du dispositif de pose mais — surtout — dans le plan des éléments de pose (galets de pose). Dans l'art antérieur, cette rotation s'effectue également selon un axe vertical du dispositif de pose, mais cet axe est perpendiculaire aux éléments de pose (galets de pose).

Cette difficulté peut également s'exprimer par la pliure du joint selon un axe vertical ou un axe horizontal : si le joint comporte une embase en « queue de sapin » qui est introduite dans la rainure et le corps du joint, lequel comprend une ou plusieurs lèvres ou encore un bourrelet plein ou creux, et si l'on considère la section de ces parties après une coupe verticale, on peut définir un axe horizontal passant par la lèvre et l'embase et un axe horizontal séparant la base et la lèvre. Dans l'art antérieur de la pose, la pliure se fait selon cet axe horizontal du joint, comprimant ainsi l'embase et étirant la lèvre. On verra au contraire que, dans la présente invention, la pliure se fait selon l'axe vertical décrit.

L'encombrement de la tête ne posait, jusqu'alors, pas de problème, puisque l'impératif premier était le contact permanent du galet de pose avec le joint dans la rainure au passage de l'angle, le corps du dispositif de pose étant libre de balayer l'espace environnant. Au contraire, dans le cas visé par la présente invention, le corps du dispositif doit répondre à l'impératif énoncé et, du fait que tout l'ensemble se meut autour d'un axe vertical, la présence du chant vertical du vantail bloque cette manoeuvre.

On connaît également un autre dispositif de pose d'un joint souple, décrit dans le EP-A-0 398 769 au nom de la Demanderesse, et comportant les éléments énoncés dans le préambule de la revendication 1.

Ce dispositif, conçu pour la pose d'un joint de fond de vitrage ou d'un joint de parclose qui sont des joints relativement peu étirables, ne permet pas la pose convenable de joints très extensibles tels que les joints d'étanchéité, notamment en raison des déformations que subirait le joint lors de son entraînement.

La présente invention a pour objet de résoudre ces problèmes, en proposant une structure de tête de pose de joint souple qui permette d'équiper de façon entièrement automatique l'élément de porte ou de fenêtre.

Selon l'invention, le dispositif, qui est du type décrit dans le EP-A-0 398 769 précité, comporte les éléments énoncés dans la partie caractérisante de la revendication 1.

L'invention vise également la machine de pose automatique de joint comprenant un tel dispositif.

On notera que l'invention porte essentiellement sur la structure de la tête de pose du joint ; les autres éléments de la machine, à savoir les moyens d'amenage du vantail, de bridage, de déplacement en X et en Y de la tête et de pivotement de celle-ci sont essentiellement semblables aux moyens homologues décrit dans le EP-A-0 387 124 précité, de sorte que l'on ne décrira pas à nouveau ces éléments, étant considéré que les enseignements correspondants du EP-A-0 387 124 font partie intégrante de la présente description.

On va maintenant décrire en détail un exemple de réalisation de la tête selon l'invention, en référence aux dessins annexés. On notera que, sur toutes les figures, les mêmes références numériques désignent des éléments identiques.

La figure 1 est une vue en élévation frontale de la tête selon l'invention avec, en coupe, le vantail en cours d'équipement.

La figure 2 est une vue en élévation latérale, partiellement en coupe selon II-II de la figure 1, de cette même tête.

La figure 3 est une vue en élévation latérale, selon III-III de la figure 1, de cette même tête.

La figure 4 est une vue de dessus, en coupe selon IV-IV de la figure 1, de cette même tête.

La figure 5 est une vue latérale partielle, selon V-V de la figure 1, montrant le mécanisme de relevage de l'équipage supportant les moyens de guidage et de pose du joint.

La figure 6, précitée, illustre une section d'un ensemble dormant-ouvrant en PVC, pourvu de son joint spécifique, que peut poser le dispositif selon l'invention.

Les figures 7 à 9, précitées, illustrent en section diverses formes d'ensembles dormant-ouvrant en bois, pourvus de joints susceptibles d'être posés par les dispositifs de l'art antérieur.

La tête selon l'invention est montée sur un ensemble chariot-portique à mouvements croisés avec possibilité de rotation commandée autour d'un axe vertical, du même type que le dispositif décrit dans le EP-A-0 387 124 précité, auquel on se référera pour de plus amples détails.

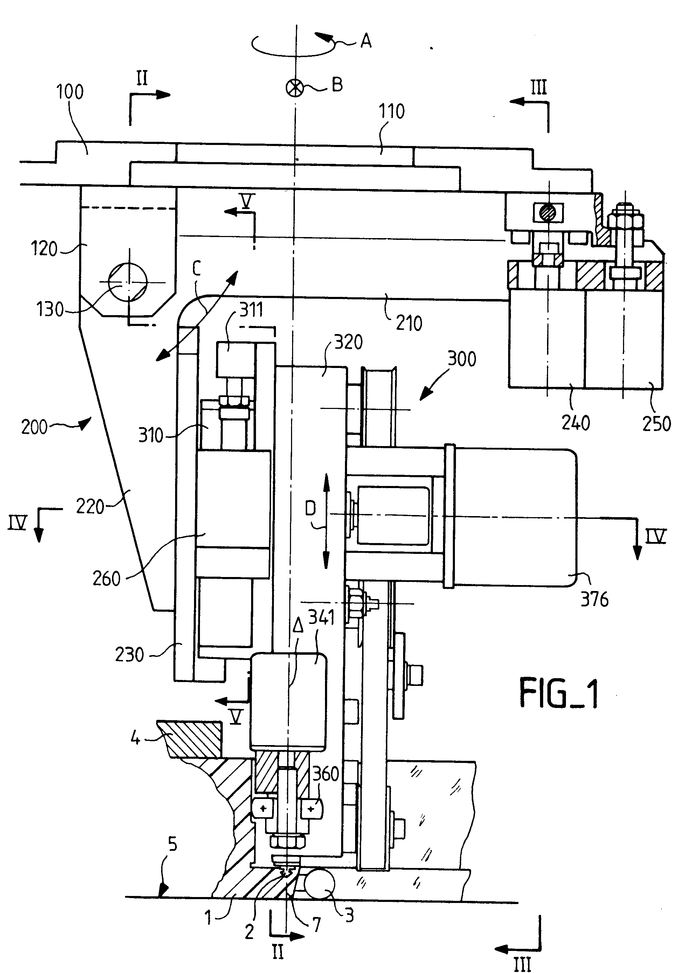

Elle comporte essentiellement, comme on peut le voir sur les diverses figures et notamment la figure 1, un ensemble support 100, relié à l'ensemble chariot-portique précité par une plaque de fût 110 et supportant, par l'intermédiaire d'étriers 120, une potence 200 articulée autour d'un axe horizontal 130 et comportant un bras horizontal 210 et un bras vertical 220.

Le bras 220 porte une platine verticale 230 sur laquelle est monté un équipage 300 supportant les divers organes réalisant la pose du joint, cet équipage étant mobile en translation verticale par coulissement d'un rail 310 par rapport à la platine 230.

La tête opère sur un vantail 1, par exemple un vantail de fenêtre, afin d'y poser par enfoncement dans une rainure pré-existante un joint souple tel que le joint référencé 2. Comme on peut le voir, avec les conventions de la figure où le vantail est posé à plat, face intérieure dirigée vers le support 100, le joint est inséré dans une rainure verticale périphérique réalisée sur la face interne de l'aile de recouvrement.

Cette configuration correspond typiquement au cas des vantaux en PVC (poly(chlorure de vinyle)), mais sans que ce cas particulier soit en aucune façon limitatif ; la tête de l'invention peut être en effet employée aussi bien pour l'équipement de vantaux en bois ou en aluminium, ou même pour des vantaux, autres que ceux de porte, porte-fenêtre ou fenêtre, présentant des angles sur la face interne d'ailes de recouvrement nécessitant un tel dispositif de pose.

Le vantail, éventuellement déjà équipé de ses ferrures 3, est calé, mesuré et bridé par des mâchoires 4 sur un plan d'appui 5 qui restera fixe pendant toute la durée de la pose du joint.

La pose du joint se fait, de manière elle-même connue, par un mouvement d'avance continu et uniforme de la tête (flèche B), qui progresse au même rythme que le joint est débité, ce dernier venant s'insérer de lui-même dans la rainure du vantail ; le pivotement de la tête (flèche A) permet de suivre les angles.

Le système de tête de manipulation connue ne permet pas, néanmoins, de réaliser la pose convenablement dans le cas d'angles de rainures verticales dans la face interne de l'aile de recouvrement, en raison de l'encombrement structurel important de la tête précédemment proposée.

C'est pour résoudre ce problème que l'invention propose de donner à la tête deux degrés de liberté supplémentaires, l'un en pivotement (flèche C) de la potence 200 par rapport à l'ensemble support 100, l'autre en translation verticale (flèche D) de l'équipage 300 par rapport à la potence 200.

Ce sont ces deux degrés de liberté supplémentaires qui permettront, de la manière que l'on indiquera plus bas, de réaliser, malgré les angles des rainures verticales dans la face interne de l'aile de recouvrement, la pose convenable du joint et la rotation appropriée de la tête.

Le mouvement de pivotement, autour de l'axe 130, de la potence 200 par rapport à l'ensemble support 100 est commandé par deux vérins 240, 250 solidaires du bras horizontal 210 de la potence 200, vérins dont les extrémités des tiges sont reliées à l'ensemble support 100. Comme on le verra par la suite, ces deux vérins, qui réalisent chacun, essentiellement, le même mouvement de pivotement, sont spécialisés en fonction des actions recherchées, le vérin 240 étant destiné à l'accostage au cours de la phase d'approche de la tête (avant de commencer à poser le joint), et le vérin 250 étant un vérin auxiliaire destiné à effectuer, lors de la phase de pose, des pivotements d'amplitude limitée au voisinage de chacun des angles du vantail. On notera que ces vérins 240, 250 ne servent qu'au relevage de la potence (pivotement dans le sens contraire des aiguilles d'une montre) et que, lorsqu'ils ne sont pas activés (position opératoire normale), la potence n'est sollicitée que par son propre poids, sans assistance d'un vérin.

Le vérin 240 est totalement désactivé lors de la manoeuvre d'accostage, puisque c'est par gravité de l'ensemble que s'effectue ce pivotement. Ce vérin 240 n'est commandé que pour la cinématique inverse, tandis que le vérin 250 est commandé dans les deux sens, ses fonctions étant essentiellement des fonctions de butée pour limiter les courses de pivotement selon les cas. Le vérin 250 permet donc, par sa double commande, de connaître des positions prédéterminées, ce que ne peut réaliser le vérin 240. Des dispositifs à axe fileté et écrou donnent des limites prédéfinies à l'amplitude des courses des vérins 240 et 250.

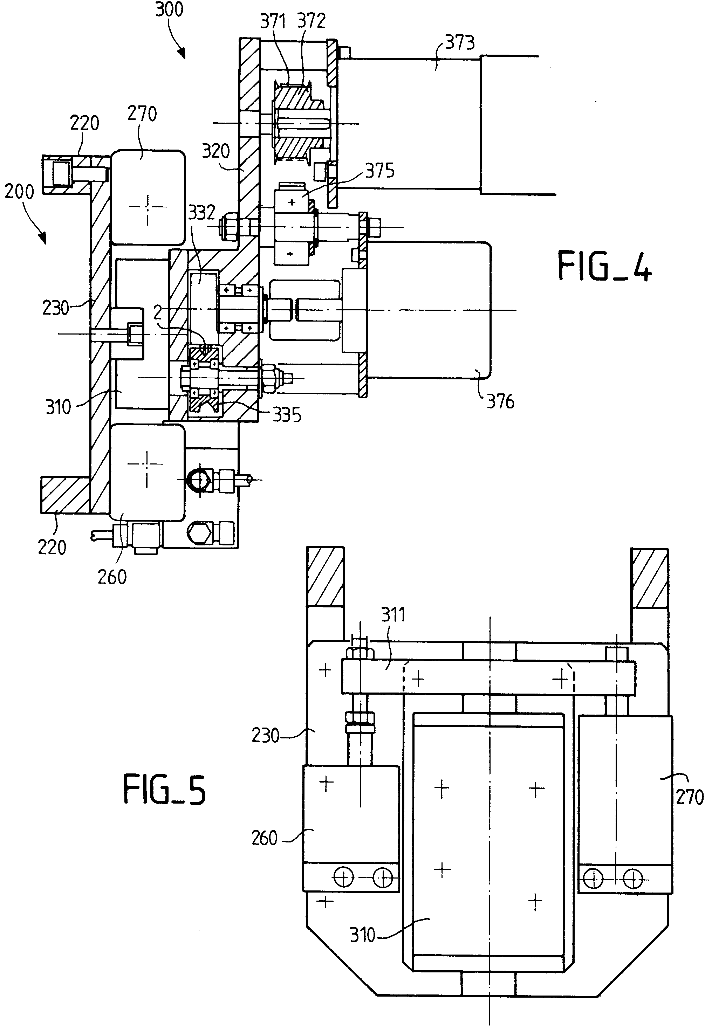

En ce qui concerne le mouvement de translation verticale du chariot 300 par rapport au bras vertical 220 de la potence 200, ce mouvement est obtenu par l'action de deux vérins 260 et 270 (le vérin 270 étant visible sur les figures 4 et 5), dont le corps est solidaire de la platine 230 et dont la tige sollicite une traverse 311 solidaire du rail 310 de l'équipage 300. Ici encore, ces vérins sont spécialisés, le vérin 270 étant destiné à l'accostage au cours de la phase d'approche de la tête et le vérin 260 étant un vérin auxiliaire destiné à effectuer, lors de la phase de pose, des relevages d'amplitude limitée au voisinage de chacun des angles du vantail. De façon comparable au vérin 240, le vérin 270 est totalement désactivé lors de la manoeuvre d'accostage, puisque c'est par gravité de l'ensemble que s'effectue la translation. Ce vérin 270 n'est commandé que pour la cinématique inverse, tandis que le vérin 260 est commandé dans les deux sens, ses fonctions étant essentiellement des fonctions de butée pour limiter les courses de pivotement selon les cas. Le vérin 260 permet, de façon comparable au vérin 250, par sa double commande, de connaître des positions prédéterminées, ce que ne peut réaliser le vérin 270. Des dispositifs à axe fileté et écrou donnent, ici encore, des limites prédéfinies à l'amplitude des courses des vérins 260 et 270.

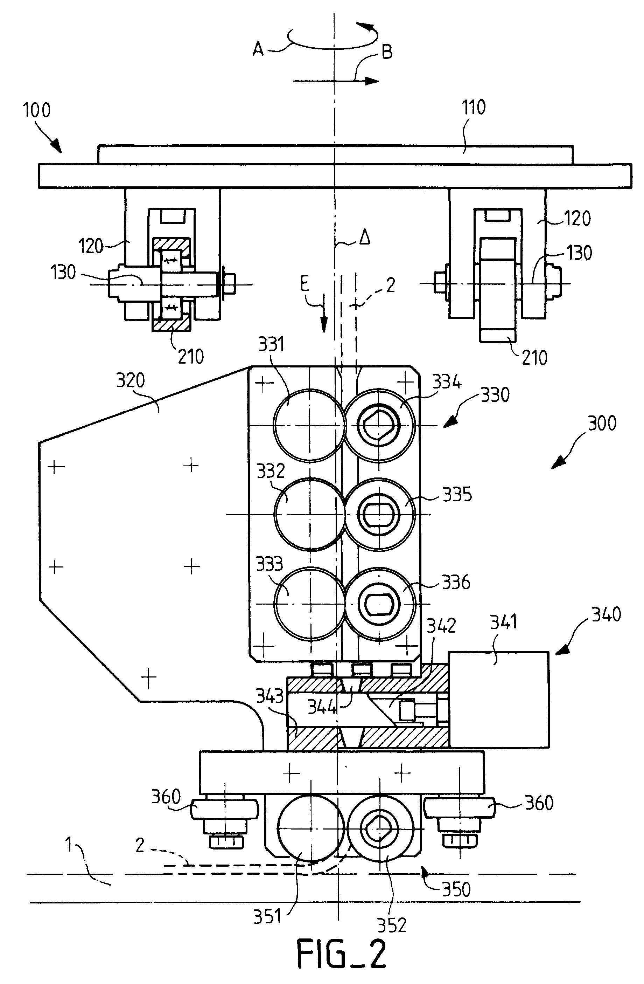

On va maintenant décrire les divers organes supportés par l'équipage 300, visibles notamment sur les figures 2 à 4.

Cet équipage 300 comporte, montés sur une plaque support 320, des moyens 330 de débit et d'avance en continu du joint, des moyens 340 de découpe du joint, des moyens 350 de pose du joint et des moyens 360 de guidage relatif de l'équipage par rapport au profil du vantail.

Plus précisément, les moyens 330 de débit et d'avance en continu du joint comportent une pluralité de galets 331, 332 et 333 associés à des contre-galets respectifs 334, 335 et 336 dont le profil périphérique est un profil homologue de celui du joint (voir la coupe de la figure 4).

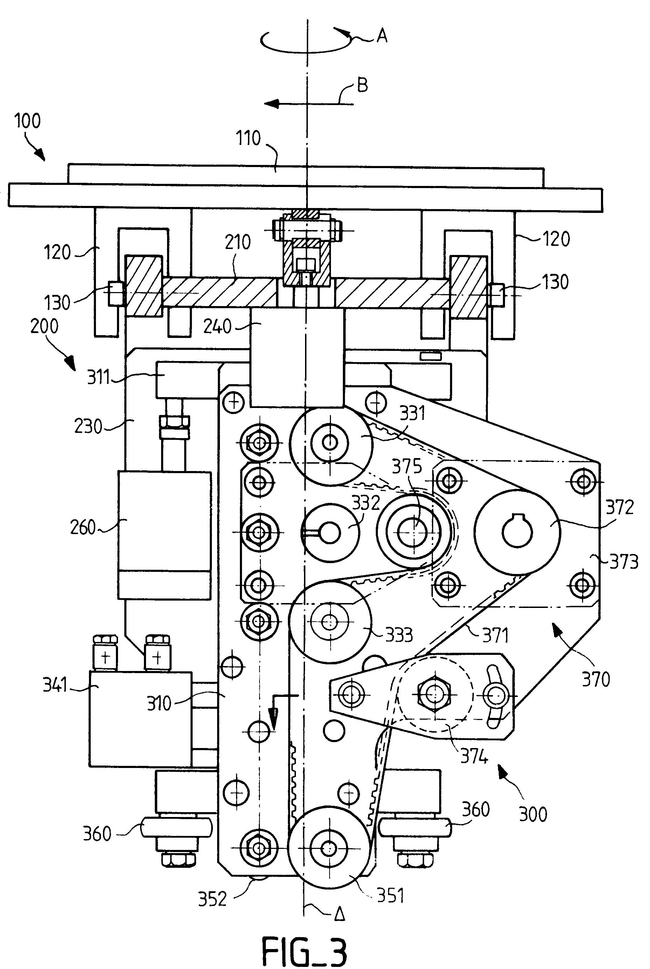

Les galets 331 et 333 sont des galets moteurs mus par un mécanisme d'entraînement 370 comportant (figure 3) une courroie 371 passée sur les galets 331 et 333 ainsi que sur un galet 372 solidaire de l'arbre d'un moteur 373 (visible notamment figure 4). Il est également prévu des galets fous 374 et 375 de guidage et de tension de la courroie.

Le joint 2, mis légèrement en compression entre les paires de galets et contre-galets 331, 334 et 333, 336, est entraîné dans un mouvement régulier d'avance (flèche E de la figure 2), qui, afin notamment de compenser le glissement dû à l'allongement du joint élastique, pourra être très exactement contrôlé par un codeur optique 376 (figure 4) solidaire du galet 332 qui, lui, n'est pas moteur.

Le système de découpe du joint 340 comporte, de manière en elle-même connue, un vérin 341 portant en extrémité de tige une lame 342 coulissant dans un guide horizontal 343 traversé verticalement (passage 344) par le joint débité par les moyens 330.

Le joint, après avoir traversé l'organe de découpe 340, poursuit son trajet vertical jusqu'à l'organe 350 de pose, organe constitué d'un galet moteur 351 (entraîné par la courroie 371 de la figure 3) et d'un contre-galet 352, ces deux pièces ayant leur axe situé sur un même plan horizontal, parallèle au vantail.

Comme illustré sur la figure 2, le joint, qui est débité verticalement en sortie de l'organe 350 sous l'effet du mouvement de rotation du galet 351, vient se placer de lui-même dans la gorge de la face interne de l'aile de recouvrement du fait du mouvement d'avance de la tête (flèche B), et ceci grâce à son élasticité propre (queue de sapin). Cette introduction est complétée par le poids de l'équipage venant presser le joint dans la rainure. Ces trois mouvements sont synchronisés et simultanés pour éviter le glissement du joint dans la rainure et, dès lors, garantir un début de pose sans risque de décalage du joint à la pose.

Enfin, l'équipage 300 porte des moyens de guidage relatif par rapport au vantail, ces moyens étant ici constitués de galets horizontaux 360 venant porter contre le chant du vantail. Bien entendu, la position de ces galets 360 est ajustable sur l'équipage pour s'adapter au type de vantail à équiper. L'ajustage est permis du fait du montage des galets sur des axes excentriques (non représentés sur les figures). Ce positionnement est tel que l'axe principal de pose du joint (axe 4 des figures) soit vertical et disposé exactement au droit de la rainure destinée à recevoir le joint.

On va maintenant décrire la séquence opératoire de pose du joint.

L'ouvrant à équiper est tout d'abord, de manière en elle-même connue, amené en position sur la table de travail de la machine, mesuré, calé et bridé en place.

La tête est alors approchée du point de départ où l'on commencera la pose du joint, les vérins 240 et 270 étant actionnés, c'est-à-dire que l'équipage est relevé et que la potence 200 est maintenue en position basculée.

Le cycle de pose commence par le positionnement vertical au dessus du point de départ résultant de l'abaissement de l'équipage 300 (passage du vérin 270 en position abaissée). On procède alors au positionnement latéral par relâchement du vérin 240, ce qui a pour effet de faire revenir en position verticale le bras vertical 220 de la potence et donc l'ensemble de l'équipage 300, l'axe Δ étant alors vertical et positionné exactement au dessus du point de pose.

On commence ensuite à dérouler une légère quantité de joint afin que celui-ci, qui affleurait la lame de la cisaille, atteigne le niveau du vantail, entre les galets 351 et 352.

On opère enfin l'accostage vertical final, par abaissement de la tige du vérin 260.

La pose s'effectue alors en combinant l'avance du joint (débit vertical, suivant la flèche E), l'avance de la tête le long du vantail (progression horizontale, suivant la flèche B) et le déroulement du joint.

Lorsque Δ se trouve au sommet de l'angle, on actionne le vérin 260 de manière à relever légèrement la tête et, simultanément, le vérin 250, de manière à écarter légèrement cette dernière du rebord du vantail. Pendant ce temps, le déroulage du joint est interrompu. On peut alors faire pivoter la tête de 90°.

Les vérins 150 et 260 sont ensuite actionnés en sens inverse, de manière à permettre à nouveau un accostage à la fois vertical et latéral de la tête sur le montant du vantail.

On reprend alors le déroulage du joint et l'avance de la tête, jusqu'à l'angle suivant où l'on procédera comme précédemment, et ainsi de suite. On notera qu'il n'est pas nécessaire de procéder à une découpe du joint dans les angles, car sa souplesse est suffisante pour permettre une insertion convenable dans l'angle.

Une fois le vantail pourvu de son joint sur les quatre côtés (ou sur trois côtés seulement, en fonction des besoins) et la tête étant presque revenue à son point de départ, on commande le vérin 341 de coupe du joint. Le déroulage du joint et l'avance de la tête sont alors poursuivis sur la longueur restante afin de permettre l'insertion dans la rainure du vantail de la partie de joint située en aval de l'organe de découpe.

On actionne alors les vérins 240 et 270 pour écarter la tête du vantail.

Ce dernier, dont l'équipement est terminé, peut alors être évacué, la tête étant prête à équiper le vantail suivant qui sera amené sur la machine.

**Revendications**

1. Un dispositif automatique de pose d'un joint souple (2), monté sur un ensemble chariot-portique à mouvements croisés avec possibilité de rotation commandée autour d'un axe vertical, comportant:

   – un ensemble support (100), relié audit ensemble chariot-portique et solidaire en rotation d'un fût,

   – une potence (200), reliée à cet ensemble support et mobile en basculement par rapport à celui-ci autour d'un axe horizontal (130) parallèle à la direction générale de progression du dispositif (B),

   – un équipage (300), relié à cette potence et mobile en translation verticale (D) par rapport à celle-ci, comportant:

   • des moyens (330) de débit et d'avance en continu du joint,

   • des moyens (340) de découpe du joint,

   • des moyens (350) de pose du joint, et

   • des moyens (360) de guidage relatif de ces moyens de pose par rapport au profil du vantail (1) recevant le joint,

   – des moyens (240, 250) pour faire pivoter la potence autour de son axe de basculement, de manière à éloigner du vantail (1), en direction horizontale, les moyens de pose du joint et leurs moyens de guidage relatif, et

   – des moyens (260, 270) pour relever l'équipage, de manière à éloigner du vantail, en direction verticale, les moyens de pose du joint et leurs moyens de guidage relatif. dispositif caractérisé en ce que, le joint souple étant un joint extensible tel qu'un joint extérieur à poser dans une rainure du vantail, notamment un joint souple d'étanchéité à poser sur la face interne d'une aile de recouvrement de ce vantail, les moyens de débit et d'avance en continu du joint amènent le joint jusqu'aux moyens de pose en suivant un trajet essentiellement rectiligne entre une pluralité de paires de galets en vis-à-vis (331-336, 351, 352), l'un au moins (331, 333) de ces galets étant moteur et synchronisé sur l'avance de la tête, et au moins un autre de ces galets, non moteur, coopérant avec des moyens (376) pour mesurer la longueur de joint entraînée par ce(s) galet(s) moteur(s) et pour en contrôler l'entraînement de manière à compenser le glissement dû à l'allongement du joint extensible.

2. La tête de la revendication 1, dans laquelle, notamment à l'approche d'un angle intérieur du vantail, les moyens pour faire pivoter la potence et les moyens pour relever l'équipage sont actionnés conjointement avant rotation de la tête.

3. Une machine de pose automatique d'un joint souple, en particulier de pose d'un joint extérieur dans une rainure de vantail de fenêtre, notamment pour la pose d'un joint souple d'étanchéité sur la face interne d'une aile de recouvrement de ce vantail, cette machine comprenant:

     – des moyens d'amenage du vantail,

     – des moyens de reconnaissance du type de vantail et de mesure des dimensions de celui-ci,

     – des moyens de bridage du vantail,

     – des moyens de dévidage de joint,

     – un ensemble chariot-portique à mouvements croisés,

     – montée sur cet ensemble, un dispositif de pose automatique de joint selon l'une des revendications précédentes, et

     – des moyens commandés d'entraînement en rotation, autour d'un axe vertical, de cette tête par rapport à l'ensemble chariot-portique.

FIG_1

FIG_2

FIG_3

300

371 372

373

220 270

200

320

375

FIG_4

332

230

2

310

335

376

220

260

311

230

FIG_5

270

260

310

FIG_6

FIG_7

FIG_8

FIG_9

Office européen
des brevets

**RAPPORT DE RECHERCHE EUROPEENNE**

Numero de la demande

EP  92 40 0507

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A,D | EP-A-0 398 769 (FERCO)<br>* colonne 1, ligne 1 - colonne 2, ligne 46 *<br>--- | 1-3 | B23P19/04 |
| A | DE-A-3 710 726 (SCHLEICHER)<br>* colonne 3, ligne 56 - colonne 4, ligne 26 *<br>* colonne 5, ligne 5 - ligne 25 *<br>* colonne 2, ligne 34 - ligne 61 *<br>--- | 1 | |
| P,A | DE-U-9 010 929 (SIEMENS)<br>* page 4, ligne 20 - ligne 32; revendications 7,8; figure 3 *<br>--- | 1 | |
| A | US-A-4 766 661 (PRODUITS DUVERNAY)<br>* colonne 7, ligne 52 - ligne 65 *<br><br>----- | 1-3 | |

**DOMAINES TECHNIQUES RECHERCHES (Int. Cl.5)**

B23P
E04F

Le présent rapport a été établi pour toutes les revendications

| Lieu de la recherche | Date d'achèvement de la recherche | Examinateur |
|---|---|---|
| LA HAYE | 15 MAI 1992 | RIS M. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
........................................................
& : membre de la même famille, document correspondant

EPO FORM 1503 03.82 (P0402)